# EUROPEAN PATENT APPLICATION

(11) **EP 4 481 603 A1**
(43) Date of publication of application: **25.12.2024**
(21) Application number: 24181786.5
(22) Date of filing: 12.06.2024
(51) Int. Cl.: G06F 21/56, G06F 16/28, G06F 16/901, H04L 9/40, G06F 18/22

(54) **SYSTEM AND METHOD FOR CLASSIFYING OBJECTS TO PREVENT THE SPREAD OF MALICIOUS ACTIVITY**

(30) Priority: 19.06.2023 RU 2023116032; 28.03.2024 US 202418619396
(71) Applicant: AO Kaspersky Lab, Moscow 125212 (RU)
(72) Inventor: PARINOV, Denis I., 125212 MOSCOW (RU); VLASOVA, Victoria V., 125212 MOSCOW (RU); ROMANENKO, Alexey M., 125212 MOSCOW (RU); ANTONOV, Alexey E., 125212 MOSCOW (RU)
(74) Representative: Chimini, Francesco

(57) **Abstract**

Disclosed herein are systems and methods for classifying objects to prevent the spread of malicious activity. An exemplary method comprises: searching for objects in a network that have generic information with other objects and collecting information about the objects, generating a graph of associations containing classified and unclassified objects in a form of vertices, whereby an association between objects indicates a presence of generic information between the objects, wherein the classified objects comprise malicious objects, extracting from the generated graph of associations at least one subgraph comprising homogeneous objects and containing at least one unclassified object based on at least one of the following: an analysis of the group association between objects; and an analysis of sequential association between objects, classifying each unclassified object in each subgraph based on the analysis using classification rules, and restricting access to an object that is classified as malicious.

## Description

### FIELD OF TECHNOLOGY

The present disclosure relates to the field of information security, and more specifically to methods for identifying malicious network nodes or intermediate network nodes through which malware is distributed in order to prevent spread of malicious activity.

### BACKGROUND

Malware is constantly evolving, prompting information security service providers to keep up with the ever-changing threat landscape. In particular, cybercriminals develop ways to distribute malware and use new vulnerabilities to penetrate computer systems (hereinafter referred to as the computer).

At the moment, various types of attacks on computer network resources are being used. For example, an attack on computer network resources, which consists of an attacker registering a domain name for the subsequent distribution of malware or using this domain name for phishing.

Such attacks can be used to redirect users to a malicious or phishing website, or a fake email service of the attacker's choice. The pages of these websites may contain, for example, Trojans or viruses, and the fake email service may ask the user for a login and password to the mailbox and transfer these credentials to the attacker. A visitor to a phishing website, on the other hand, will not be aware of the spoofing and is likely to download malware to their computer.

Some known technologies are quite effective in solving the problem of classifying malicious domains. However, despite a number of advantages, they only take into account similarity based on WHOIS and DNS information, while not taking into account other factors, such as association with malicious domain names by URI and analysis of the association of domain names on the basis of homogeneous objects associated with it, whereby the objects are homogeneous if there is generic information about the object. Therefore, the technical task of creating a way to classify objects to prevent the spread of malicious activity remains relevant.

Therefore, there is a need for a method and a system for more efficient way of identification of malicious network nodes or intermediate network nodes through which malware is distributed in order to prevent spread of malicious activity.

### SUMMARY

Aspects of the disclosure relate to systems and methods for classifying objects to prevent the spread of malicious activity.

In one exemplary aspect, a method for classifying objects to prevent the spread of malicious activity is disclosed, the method comprising: searching for objects in a network that have generic information with other objects and collecting information about the objects, generating a graph of associations containing classified objects and unclassified objects in a form of vertices, whereby an association between objects indicates a presence of generic information between the objects, wherein the classified objects comprise malicious objects, extracting from the generated graph of associations at least one subgraph comprising homogeneous objects and containing at least one unclassified object based on at least one of the following: an analysis group association between objects; and an analysis of sequential association between objects, classifying each unclassified object in each subgraph based on the analysis of the objects using classification rules, and restricting access to an object that is classified as malicious in order to prevent a spread of malicious activity.

In one example, the other objects comprise either objects that are classified as malicious or objects that have a generic information with objects that are classified as malicious.

In one example, the classification rules include at least one of the following: a similarity analysis or an analysis of objects using a machine learning model.

In one example, the similarity analysis is implemented using the Levenshtein metric.

In one example, the graph of associations contains only association between objects of different types.

In one example, the objects and object information are at least two of the following types of information: Internet Protocol (IP) address; Fully Qualified Domain Name (FQDN); Universal Resource Identifier (URI) information; domain name data, including information about a domain name registrar; information about an owner of a domain name, including a name of an owner who owns the domain name, an address of the owner of the domain name, an IP address range to which the domain name belongs on the network, and contact information for the owner of the domain name; information about an owner of the IP address, including a name and an address of the owner of the IP address; name of the computer network range; a location that corresponds to an IP address range, including country and city; contact details of an administrator; information about the IP address to which the object belongs; information about public key certificates issued for the domain name; file hash and file path; and web addresses that contain the domain name.

In one example, the URI information comprises at least a page address and page load parameters.

In one example, the generating of the graph of associations containing classified objects and unclassified objects in the form of vertices further comprises: classifying unclassified objects that are domain names as trusted in an event that the number of requests received from the domain name system exceeds a predetermined threshold.

In one example, at least one subgraph extracts associated components that contain information about associated objects, wherein the at least one object is unclassified.

In one example, each of the analysis is performed by at least one machine learning model.

In one example, the machine learning model is trained by using boosting decision trees.

In one example, the sequential analysis employs at least one neighboring malicious obj ect.

In one example, wherein the analysis of a sequential association between objects uses information about at least three objects having an association.

In one example, wherein the analysis of a group association between objects uses information about at least four objects, three of which have an association to a fourth.

In one example, the access to an object that is classified as malicious is restricted to prevent the spread of malicious activity by one of the following: blocking access to the website to which the object is associated; opening the website to which the object is associated in a browser that runs in protected mode; and pausing a transition to the website and informing a user that the website is associated with a malicious object.

In one example, a system is provided for classifying objects to prevent the spread of malicious activity, the system comprising at least one memory; and at least one hardware processor coupled with the at least one memory and configured, individually or in combination, to: search for objects in a network that have generic information with other objects and collect information about the objects; generate a graph of associations containing classified objects and unclassified objects in a form of vertices, whereby an association between objects indicates a presence of generic information between the objects, wherein the classified objects comprise malicious objects; extract from the generated graph of associations at least one subgraph comprising homogeneous objects and containing at least one unclassified object based on at least one of the following: an analysis of group association between objects; and an analysis of sequential association between objects; classify each unclassified object in each subgraph based on the analysis of the objects using classification rules; and restrict access to an object that is classified as malicious in order to prevent a spread of malicious activity.

The technical result of the present method is to prevent the spread of malicious activity on a computer network.

### BRIEF DESCRIPTION OF THE DRAWINGS

The accompanying drawings, which are incorporated into and constitute a part of this specification, illustrate one or more examples of the present disclosure and, together with the detailed description, serve to explain their principles and implementations.
**Fig. 1** illustrates an example computer network comprising a system for classifying objects to prevent the spread of malicious activity.
**Fig. 2** illustrates an example of the composition of an object classification system.
**Fig. 3** illustrates an example of a generated association graph with subgraphs in which vertices are classified using sequential association analysis.
**Fig. 4** illustrates an example of a generated association graph with subgraphs in which vertices are classified using group association analysis.
**Figs. 5a** illustrates a first example of an association graph and an analysis of an association graph.
**Figs. 5b** illustrates a second example of an analysis of an association graph.
**Fig. 6** illustrates an example of a method for classifying objects to prevent the spread of malicious activity.
**Fig. 7** presents an example of a general-purpose computer system on which embodiments of the present invention for classifying objects to prevent the spread of malicious activity can be implemented.

### DETAILED DESCRIPTION

Exemplary aspects are described herein in the context of a system and method for classifying objects to prevent the spread of malicious activity. Those of ordinary skill in the art will realize that the following description is illustrative only and is not intended to be in any way limiting. Other examples will readily suggest themselves to those skilled in the art having the benefit of the disclosure. Reference will now be made in detail to implementations of the examples illustrated in the accompanying drawings. The same reference indicators will be used to the extent possible throughout the drawings and the following description to refer to the same or like items.

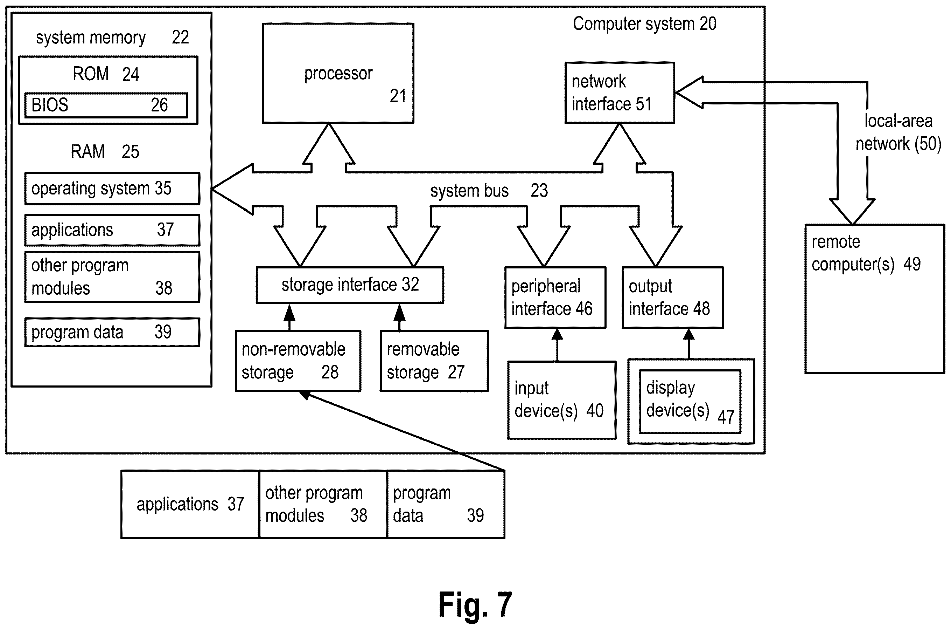

In one example, the system for classifying objects to prevent the spread of malicious activity may be implemented on the processor of a general-purpose computer (which, for example, is depicted in **Fig. 7****).** In this case, the components of the system may be realized within a single computing device, or distributed amongst several interconnected computing devices. The present disclosure describes a technical solution for classifying objects to prevent the spread of malicious activity.

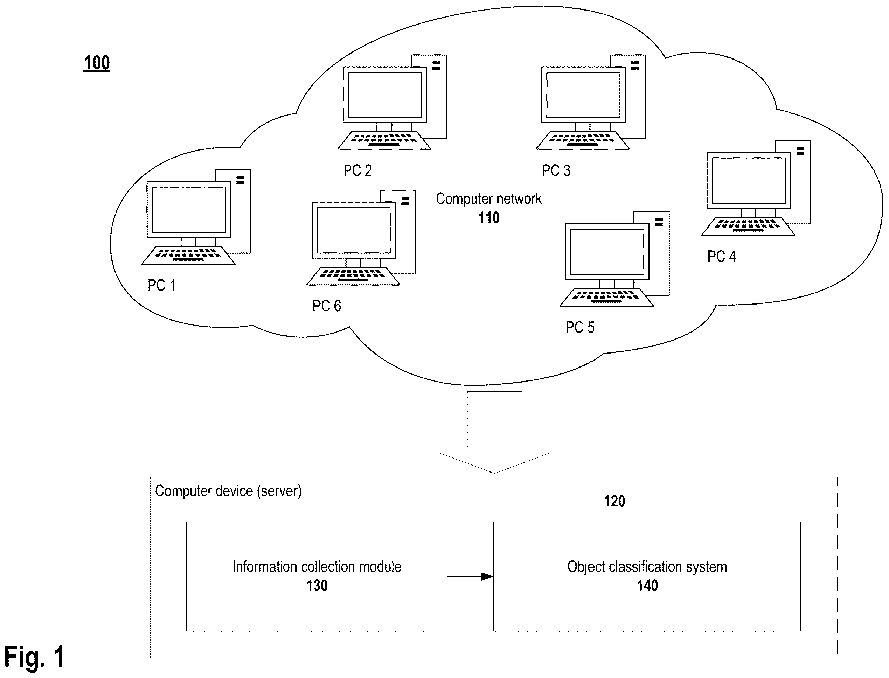

**Fig. 1** illustrates an example computer network **110** comprising a system for classifying objects to prevent the spread of malicious activity. The computer network **110** comprises at least six computers (PC1 to PC6) and a computer device (server) **120,** which in turn includes an information collection module **130** and an object classification system **140.**

In one example, the computer network **110** (hereinafter also referred to as the network 110) is one of the network nodes of the Internet. Another example of a computer network **110** is the entire Internet.

The computer of the present disclosure includes any computing device, such as a personal computer, laptop, smartphone, tablet, router, data storage system, server. An example of a server **120** on which the object classification system **140** is implemented is the computer system described in **Fig. 7****.**

The information collection module **130** is designed to collect information about the objects and transmit the collected information about the objects to the object classification system **140.** During the collection of object information, objects are searched in the computer network **110** that have generic information with objects that have previously been classified as malicious, or with objects that in turn have generic information with objects, that are classified as malicious. The objects found in the network **110** are unclassified objects.

The object classification system **140** is designed to classify objects in order to prevent the spread of malicious activity based on the classification. Objects to be classified are at least one of the following: fully qualified domain name (hereinafter referred to as the domain name); URI information; IP address; domain name data, including information about the domain name registrar; information about the owner of the domain name, including the name of the owner who owns the domain name, the address of the owner of the domain name, the range of IP addresses to which the domain name belongs on the network, and the contact information of the owner of the domain name; information about the owner of the IP address, including the name and address of the owner of the IP address; name of the computer network range; a location that corresponds to an IP address range, including country and city. contact details of the administrator; information about the IP address to which the scanned object belongs; information about the public key certificates issued for the domain name; file hash and file path; web addresses that contain the domain name. Depending on the example, objects can be classified for a single object type, such as a domain name, or for two or more object types. Classification is carried out on the basis of classification rules, which take into account various features and association of objects in the subgraph. It is worth noting that in the future, when mentioning one type of object, other types of objects can also be used.

In another example, the classification is carried out into two classes, namely malicious and trusted. In this example, there may not be enough information about the object to unambiguously classify the object. In this case, the object remains unclassified until there is enough information about the object to be uniquely classified.

It is worth noting that in other examples, objects may be classified into two or more classes, and other classes may be selected. For example, objects are categorized as malicious, non-malicious, and trusted.

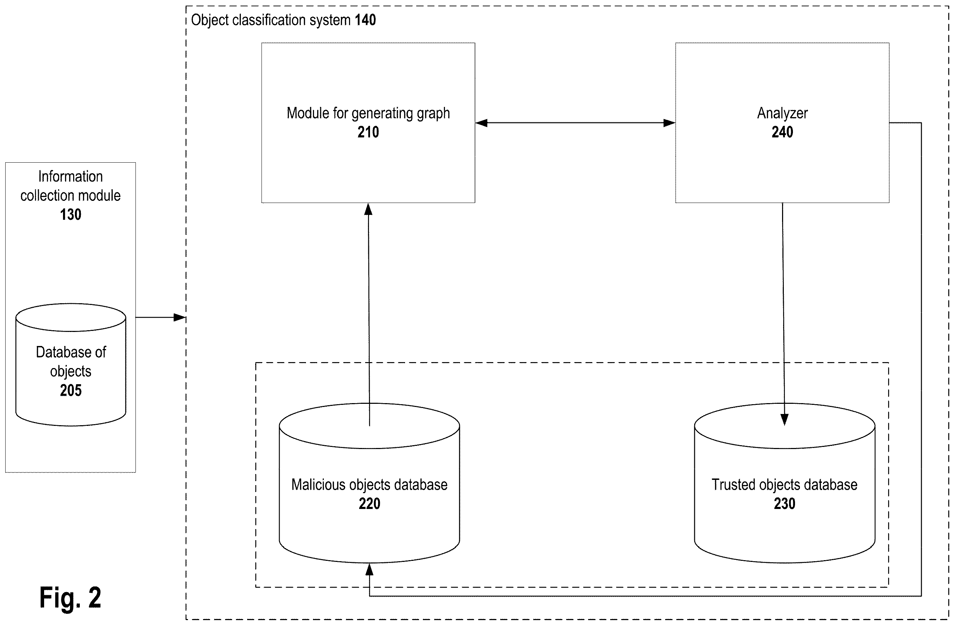

**Fig. 2** illustrates an example of the composition of an object classification system **140.** The object classification system **140** contains a module for generating a graph **210,** an objects database **205,** a malicious objects database **220,** a trusted objects database **230,** and an analyzer **240.**

The module for generating the graph **210** is designed to generate a graph of assosiations based on information from the malicious objects database **220** and information about objects received from the information collection module **130.**

The malicious objects database **220** contains information about known malicious objects as well as information about associated objects. An association between objects refers to the existence of generic information between these objects. For example, the malicious objects database **220** stores the IP address 192.158.0.13, the information collection module **130** collects information about domain names referring to this IP address from the computer network **110.** In this example, the specified IP address is the association between the objects.

In one example, the information collection module **130** comprises a objects database **205.** The objects database **205** contains information about the associations and class of the objects collected by the information collection module **130.** In this example, the malicious objects database **220** stores at least the markup for the objects. As applied to domain names in the malicious objects database **220,** masks for malicious and phishing domain names are stored. Masks are constrained regular expressions that replace part of the domain name with asterisks. In the case, for example, for a file, the malicious objects database **220** contains the md5 file, the name of the malware, etc. In other words, the malicious objects database **220** stores malicious object keys (e.g., masks and hashes) that correspond to multiple objects in the objects database **205.** In this case, the module for generating the graph **210** builds the graph based on information from the malicious objects database **220** and object information from the objects database **205.**

An example of information contained in the malicious objects database **220** and/or the information collection module **130** (depending on the implementation) comprises:
- Malicious domain name "malware.com";
- IP address 192.158.0.13; and
- information that the specified domain name refers to the specified IP address.

The information about known malicious objects contains at least one of the following:
- information about the object obtained using the WHOIS service;
- information about the object obtained using the WHOIS IP service;
- information about the object obtained using the Domain Name System;
- information about the public key certificates issued for the domain name; and
- web addresses that contain information about the page, its download options, and the files on the page.

The malicious objects database **220** can obtain information from a variety of sources. Such sources can be both external sources, such as the WHOIS service, and internal sources, namely, the analyzer **240.**

In turn, the information about the object obtained using the WHOIS service contains at least one of the following:
- information about the owner of the domain name, including the name of the owner who owns the domain name, the name of the company, the address of the owner of the domain name, or the contact information of the owner of the domain name;
- contact details of the domain name administrator;
- information about the domain name registrar;
- the date of creation of the domain name;
- domain name registration period; and
- the current status of the domain name.

The object information obtained using the WHOIS IP service contains information about at least one of the following:
- the range of IP addresses to which the scanned object belongs;
- name of the computer network range;
- the owner of the IP address, including the name and address of the owner of the IP address;
- the country to which the IP address range corresponds; and
- the city to which the IP address range corresponds.

The object information obtained by the Domain Name System refers to the IP address to which the object being scanned belongs.

The information about the public key certificates issued for a domain name contains information about the certificates issued for the domain name by certification authorities. An example of such certificates is an SSL (Secure Sockets Layer) certificate.

Web address information contains information about the protocol, FQDN, port, as well as the hash of a particular file on the web server, the path to a specific file on the web server, and URI (Uniform Resource Identifier) information of the form <schema>: [//<host>[: <port>]] [/< page address>][?<page load parameters>].

In a particular example, information about each malicious object is contained in the malicious objects database **220** until the object classification system **140** receives a notification that the corresponding object has been blocked. Upon receipt of information about the blocking of the object, the object classification system **140** updates the information in the malicious objects database **220,** using the analyzer **240.**

In another particular example, the malicious objects database **220** additionally contains information about the storage time of information about each malicious object, e.g., six months, after which this information about the malicious object is deleted from the malicious objects database **220.** For the most efficient storage of information, as well as for minimizing false positives during analysis, the time of information storage can be chosen in a practical way. For example, attackers often use short-lived domain names, often associating new domain names with previously used IP addresses, after which sites distributing malware are blocked by antivirus solutions. Therefore, in order to update information about malicious objects, it is necessary to periodically update the malicious objects database **220.**

In another particular case, both the malicious objects database **220,** which stores object markups, and in the objects database **205,** data is periodically updated, for example, once every six months, based on information received from external sources, for example, the WHOIS service.

The trusted objects database **230** contains a list of trusted objects. For example, a trusted domain name is a domain name that is requested from a DNS server at a high frequency, that is, the frequency exceeds a predefined threshold. Trusted objects are also objects, that have been analyzed in advance and recognized as legitimate.

In a preferred example, the module for generating the graph **210** generates the association graph as follows:

At the first step, it generates vertices, which are objects from the malicious objects database **220** and information about objects received from the information collection module **130.**

In a particular example, vertices are generated using object information from the objects database **205.** In this case, objects that are not classified are stored in the objects database **205,** and malicious objects are stored in the malicious objects database **220.** If the object information from the objects database **205** is present in the malicious objects database **220,** the corresponding vertex is classified as malicious.

In the second step, the module for generating the graph **210** connects the two vertices with an edge, in cases where the corresponding features are connected. For example, two vertices have two domain names that refer to the same IP address. In this case, the graph will draw edges between the vertex that is the IP address and each of the two vertices that are domain names. Another example, the forty vertices corresponding to IP addresses belong to the same IP range. In this case, the graph will draw edges between the vertex that is the IP range with each of the forty vertices that are IP addresses. Thus, the module for generating the graph **210** builds all edges based on information about the association between features.

In a particular implementation, the association graph contains only association between objects of different types. That is, an association of the type domain name and domain name will not be built.

Initially, the association graph contains two classes of vertices: malicious vertices and unclassified vertices. The malicious vertices correspond to malicious objects from the malicious objects database **220.** The unclassified vertices correspond to the objects that have been retrieved from the information collection module **130.** It is worth noting that in the analysis described below, if there is enough information about the object, the unclassified vertices are changed to one of two classes vertices, namely malicious or trusted. If there is not enough information about the feature to unambiguously classify, the vertex will remain unclassified. The class to which the vertex corresponds depends on the results of the analysis.

In a particular example, the module for generating the graph **210** additionally connects vertices based on URI information (e.g., page address, page load parameters, and other constituent parts of URI information), WHOISIP information, and WHOIS information.

The analyzer **240** is used to extract at least one subgraph from an association graph, as well as to analyze unclassified subgraph objects. It is worth noting that all objects in the same subgraph are homogeneous.

The analyzer **240** extracts from the association graph at least one subgraph that includes homogeneous objects and comprises at least one unclassified object based on at least one of the following approaches:
- analysis of group association between objects; and
- analysis of the sequential association between objects.

It is worth noting that the analyzer **240** uses a corresponding machine learning model for each approach, which is trained to implement the corresponding approach. Each machine learning model is based on one of the above approaches.

In a particular implementation, the machine learning model is based on the principle of "boosting decision trees". A decision tree is a hierarchical tree structure consisting of a rule of the form "If ..., then ...". When trained, the machine learning model receives a sample of information about objects from triplets of objects such as "malicious of one type, intermediate of another type, malicious of the same type as the first" and "malicious of one type, intermediate of another type, trusted of the same type as the first". It is worth noting that an intermediate object is an object that is associated with the first and last object of the three objects.

In other particular implementations, the machine learning model is based on principles such as the k Nearest Neighbors (kNN) method, neural network, support vector machine, etc.

In a particular example, before extracting a subgraph from the association graph, the analyzer **240** determines, for each unclassified vertex in the association graph, the number of requests for those vertices of domain names to the DNS server. If the number of requests to the DNS server exceeds a specified threshold, such as 10,000 requests, then the analyzer **240** classifies that vertex as trusted and adds the corresponding domain name to the trusted objects database **230.** In this case, the specified domain name is excluded from further analysis.

In yet another particular example, before extracting a subgraph from the association graph, the analyzer **240** determines, for each unclassified vertex in the association graph, the number of requests for those vertices of domain names to the DNS server. If the number of requests to the DNS server exceeds a specified threshold, such as 10,000 requests, then the analyzer **240** excludes the corresponding vertex from the association graph.

Depending on the example, these analysis approaches may be applied in various combinations and sequences. In one example, the analyzer **240** uses both approaches sequentially in the analysis, e.g., in the following order: sequential association analysis, group association analysis. In another example, the analyzer **240** uses parallel approaches. In another example, the analyzer **240,** in the case of sequential use of approaches, determines the need for a subsequent approach after each approach. The need for a follow-up approach is determined on the basis of the results obtained from the previous approach. In another example, the analyzer **240** uses approaches in parallel and, upon receipt of the results, generates a single result.

In the event that the analyzer **240** uses the sequential association analysis approach, the analyzer **240** analyzes the triplets of vertices on the association graph based on feature information using a machine learning model trained for the task. It is worth noting that when analysing using the sequential association analysis approach, the analyzer **240** analyzes triplets of vertices of the form "malicious vertex of one type, intermediate vertex of another type, unclassified vertex of the same type as the first".

In a particular example, sequential analysis uses at least one neighboring malicious object, as well as information about at least three associated objects. Let us consider the operation of this approach on the basis of an association graph generated by the module for generating the graph **210.**

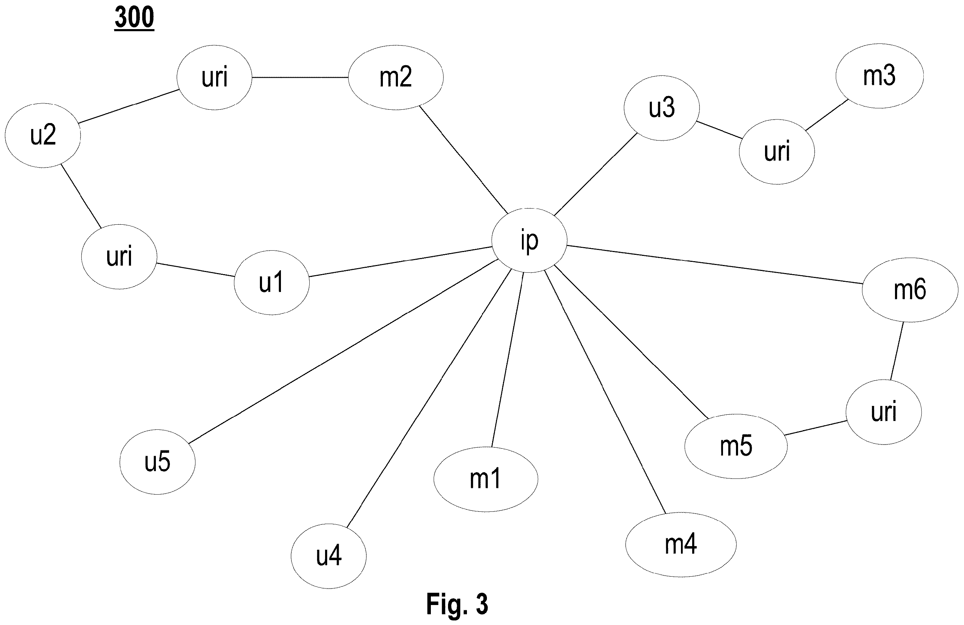

**Fig. 3** illustrates an example **300** of a generated association graph with subgraphs in which vertices are classified using sequential association analysis. As shown in **Fig. 3****,** unclassified vertices of type domain are denoted as "u", malicious vertices of type domain are denoted as "m", vertices corresponding to information uri as "uri", and vertices corresponding to ip as "ip". For example, analyzer **240** feeds the machine learning model information about the malicious domain name corresponding to the vertex m2 and information about the unclassified domain name corresponding to the vertex u2. Vertices u2 and m2 are connected through the vertex of the uri, which corresponds to the generic part of the URI information. If the machine learning model decides that the information about these domain names is similar, then the analyzer **240** will add these three vertices to the subgraph for further analysis.

Let's look at another example. The analyzer **240** transmits to the machine learning model information about malicious domain names corresponding to vertices m3 and m1, as well as information about an unclassified domain name corresponding to vertex u3. If the machine learning model decides that vertices m1 and u3 are similar, then analyzer **240** will add a the three vertices m1, ip, u3 into the subgraph for further analysis. If the machine learning model decides that the vertices m3 and u3 are similar, then the analyzer **240** pushes the three vertices m3, uri, u3 into the subgraph for further analysis. Since the vertex u3 was already in the subgraph, the subgraph will be supplemented with new vertices. Thus, the subgraph will consist of the following vertices: m1, ip, u3, uri, m3.

Analyzer **240** analyzes the remaining associations in the graph of associations of the form "malicious vertex, intermediate vertex of a different type, unclassified vertex of the same type as the first" in the same way as the examples described earlier.

In the event that the analyzer **240** uses the group association analysis approach, the analyzer **240** analyzes the associations in the association graph based on object information using a machine learning model trained for this task. When trained, the machine learning model receives as input an object that is not a domain name and aggregated information about all objects associated with the object being analyzed. Let's take a look at how this approach works based on a graph of associations, generated by the module for generating the graph **210.**

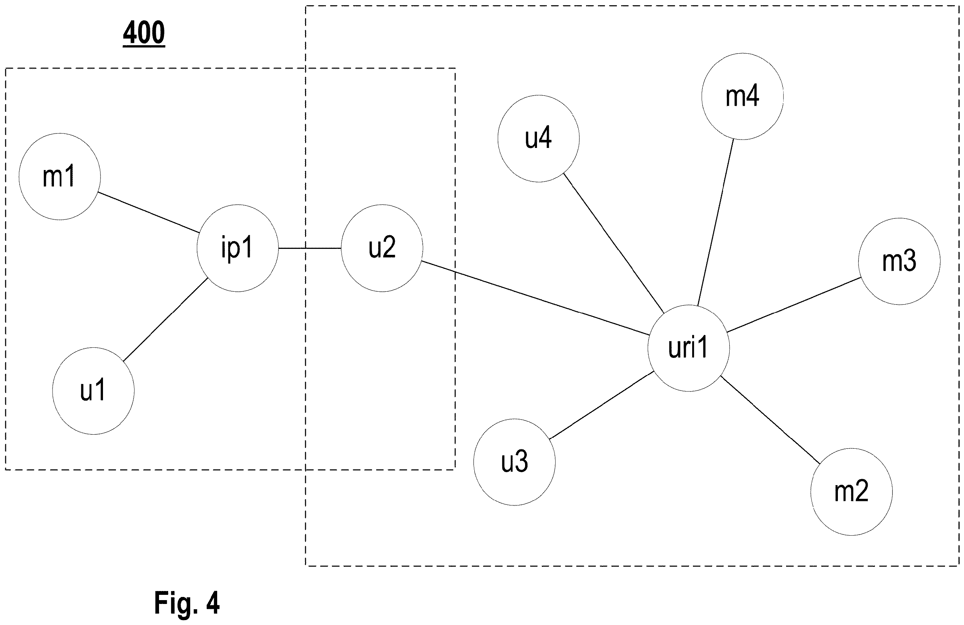

**Fig. 4** illustrates an example **400** of a generated association graph with subgraphs in which vertices are classified using group association analysis. In **Fig. 4****,** an unclassified vertex is labeled "u", a malicious vertex is labeled "m", a vertex corresponding to a generic IP address is labeled "ip1", and a vertex corresponding to a generic part of the URI is represented by "uri1". The vertices m1, u1, and u2 are connected to the vertex ip1, because their respective domain names have generic IP address, and vertices u2, u3, u4, m2, m3, m4 are connected to the vertex uri1 because their corresponding domain names have generic URI part. In this approach, analyzer **240** analyzes the vertices uri1 and ip1. For example, the analyzer **240** passes to the machine learning model the object uri1 and information about all vertices associated by an edge with the vertex of uri1. If the machine learning model outputs, to the analyzer **240,** that the object corresponding to the vertex of uri1 is similar to a malicious information URI, then the analyzer **240,** will add the vertex of uri1 and all associated vertices into a subgraph for further analysis. The ip1 vertex will be analyzed in the same way.

In a particular example, the group association analysis approach analyzes information about at least four objects, three of which must be associated with a fourth.

In a particular example, the features allocated by the analyzer **240** are not added to the generic subgraph, but are analyzed only on the basis of neighboring vertices.

After extracting a subgraph from an association graph, the analyzer **240** classifies the unclassified objects of the selected subgraph based on the analysis of the objects using classification rules.

In a particular example, at least one subgraph uses the analysis approaches described above to identify associated components that contain information about associated objects, wherein at least one object is unclassified.

Classification rules include at least one of the following approaches:
- analysis of object similarity; and
- analyze objects using classification rules.

Using the "analysis of object similarity" approach, the analyzer **240** analyzes the vertices of the subgraph based on feature information in one of the following ways:
A) similarity based on the Levenshtein metric; and
B) similarity based on the machine learning model.

The similarity based on the Levenshtein metric is described in known art, e.g., V. I. Levenshtein, Binary Codes Capable of Correcting Deletions, Insertions, and Reversals, Doklady Academy of Sciences of the USSR, 1965, vol. 163, no. 4, 845-848.

The analyzer **240** contains at least one machine learning model. Preliminarily, the machine learning model is trained on a sample of data consisting of pairs of objects, namely pairs of similar objects and pairs of dissimilar objects, and the objects must be of the same type. The result of training is a model that determines the similarity of the received input objects. By using a similarity analysis approach using a machine learning model, the analyzer **240,** analyzes more complex dependencies of object pairs. For example, two random domain names of roughly the same length - jsidfjk.com and reuhuh.com - will be identified by the machine learning model as similar. Another pair of domain names, jsidfjk.com and myaddress.com, will be identified by the machine learning model as dissimilar, because the first domain name consists of a random set of characters, while the second does not.

In one example, the machine learning model, when providing a decision about the similarity of information about objects, calculates a value indicating a degree of similarity or difference among objects.

In a particular example, a value indicating how similar the features are is expressed as a percentage.

In another particular example, a value indicating how similar the features are is represented as a number, e.g., a number between 0 and 1.

In another example, a value indicating how similar the objects are is expressed by the degree of similarity, such as: "dissimilar", "slightly similar", "similar".

If the analyzer **240** has classified an unclassified vertex from the subgraph as malicious based on the use of at least one of the above-mentioned methods, then the analyzer **240** adds either the corresponding object or the object markup (masks, hashes) to the malicious objects database **220.**

Using the "object analysis using classification rules" approach, the analyzer **240** analyzes the vertices of the subgraph using specified classification rules. Typically, classification rules are formed with the help of a user who has the necessary qualifications and knowledge in the field of information security. For example, if the machine learning model outputs, to the analyzer **240,** that the object corresponding to the vertex of uri1, is similar to a malicious information URI object, but the number of unclassified vertices of the subgraph is greater than a certain number, or the number of unclassified vertices is less than a certain percentage of the total number of vertices associated with the vertex of the uri, analyzer **240** will not classify previously unclassified vertices as malicious. Such rules are necessary to minimize false positive classification.

In a particular example, the analyzer **240** analyzes the vertices of the subgraph using a machine learning model, namely, a graph neural network. As described above, at least two basic analysis approaches (i.e., sequential association analysis and group association analysis) for subgraph extraction based on the association graph analysis by analyzer **240** are described. It should be noted that the results of extracting subgraphs from the association graph and subsequent classification using these approaches may differ. Thus, the analyzer **240** can analyze vertices using one of the following analysis approaches, but with both types of analysis, the number of malicious vertices detected increases, which increases the efficiency of the analysis.

Based on the object classification performed by the analyzer **240,** the spread of malicious activity is prevented using a mean of protecting the user's computer device from malicious objects (not shown in **Fig. 1****).** For example, among others, at least one of the following methods may be used:
- restricting access to an object that is classified as malicious;
- completely blocking access to the website that belongs to the malicious object;
- opening a website related to a malicious object in a browser that is running in protected mode; and
- pausing the transition to the website and inform the user that the website is associated with a malicious object.

For a better understanding, examples are provided below illustrating how the method of the present disclosure operates.

The information collection module **130,** after collecting information about the objects, transmits information about the objects to the module for generating the graph **210.** Based on the information about objects received from the information collection module **130,** as well as the information stored in the database of malicious objects database **220,** the module for generating the graph **210** builds a graph of associations. Analyzer **240** analyzes the number of requests for each unclassified vertex of type Domain Name. If the number of requests exceeds a certain number, the analyzer **240** will classify the vertex to which the corresponding unclassified domain name belongs as trusted, and will add the corresponding domain name and IP address to the trusted objects database **230.**

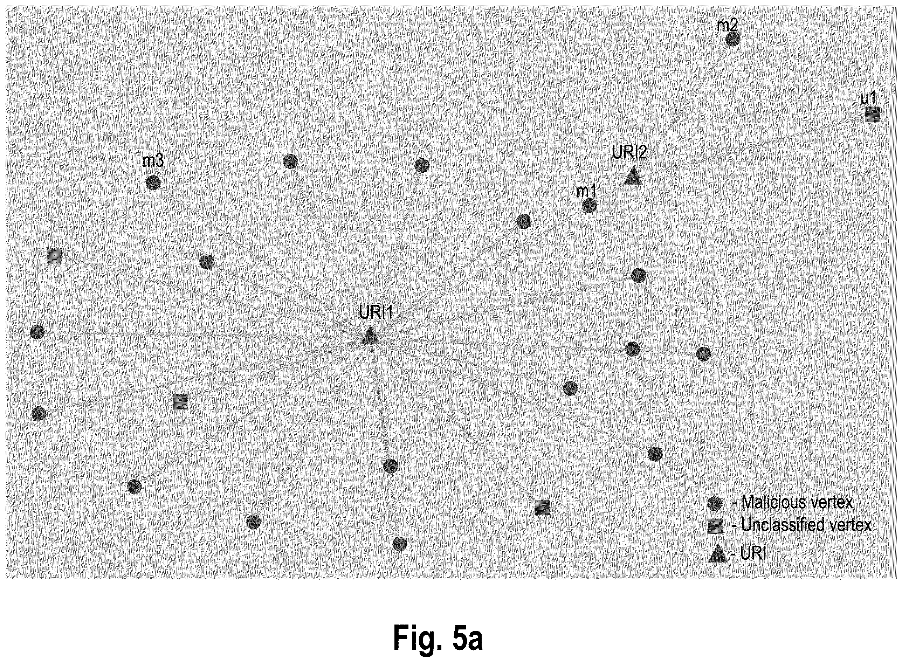

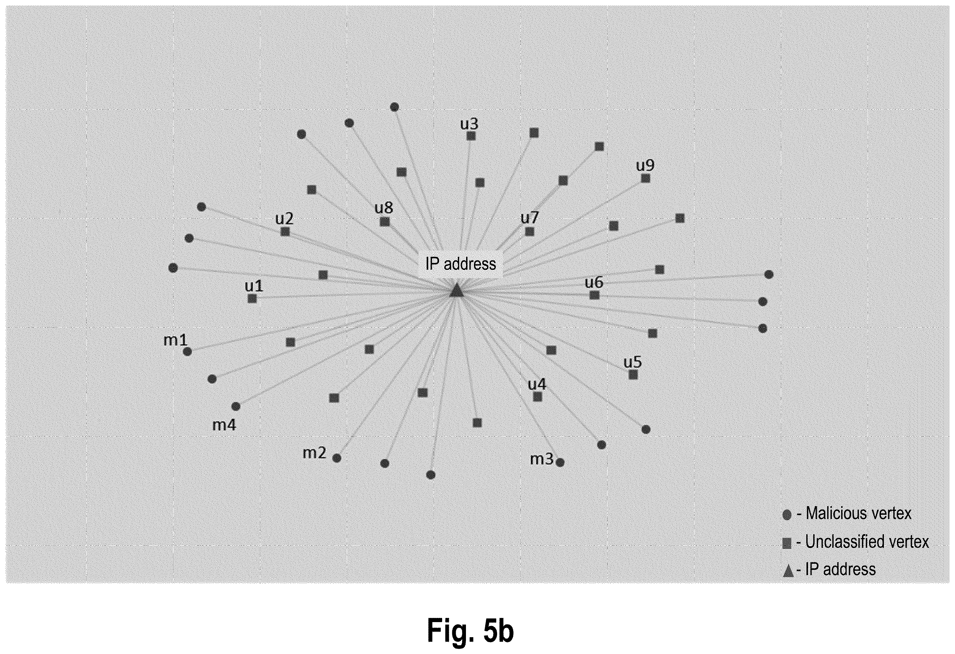

Next, the analyzer **240,** using sequential association analysis and/or group association analysis, identifies at least one subgraph, such as those shown in **Fig. 5a** and **Fig. 5b****,** in which, **Figs. 5a** illustrates a first example of an association graph and an analysis of an association graph, and **Figs. 5b** illustrates a second example of an analysis of an association graph.

In **Fig. 5a****,** unclassified vertices are represented as squares, malicious vertices are represented as circles, and IP address are represented as triangles. The trio of vertices m2, URI2, u1 was added to the subgraph using sequential association analysis. The vertex of URI1 and its associated vertices were added to the subgraph using group association analysis. Vertex URI1 is malicious, vertex URI2 is unclassified. After at least one subgraph has been identified, the analyzer **240** analyzes the feature information of each pair of vertices of the "malicious and unclassified" type using object similarity analysis using a machine learning model. If the machine learning model outputs, to the analyzer **240,** that the unclassified object is similar to a malicious object, the analyzer **240** classifies the previously unclassified vertex as malicious.

In **Fig. 5a****,** the analyzer **240** classified the vertex of URI2 as malicious and added its corresponding object to the malicious objects database **220.**

In the next step, the analyzer **240** applies object analysis using classification rules. In this example, the rule "If the number of malicious vertices is more than 75% of the total number of vertices in the subgraph, classify all vertices as malicious" was triggered.

Let's look at another example of how the method of the present disclosure operates. **Fig. 5b** shows the subgraph selected by the analyzer **240.** The vertex IP association and its associated vertices were added to the subgraph using group association analysis. The vertex of the IP association is malicious.

In the first step, the analyzer **240** analyzes the feature information of each pair of vertices of the "malicious and unclassified" type using object similarity analysis using a machine learning model. If the machine learning model outputs, to the analyzer **240,** that an unclassified object is similar to a malicious object, the analyzer **240** classifies the previously unclassified vertex as malicious, and adds the corresponding object to the malicious objects database **220.**

In this example, when analyzing the pair of vertices u1 and m3, the analyzer **240** classifies the vertex u1 as malicious and added its corresponding object to the malicious objects database **220.** In the next step, the analyzer **240** applies object analysis using classification rules. In this example, none of the rules were triggered.

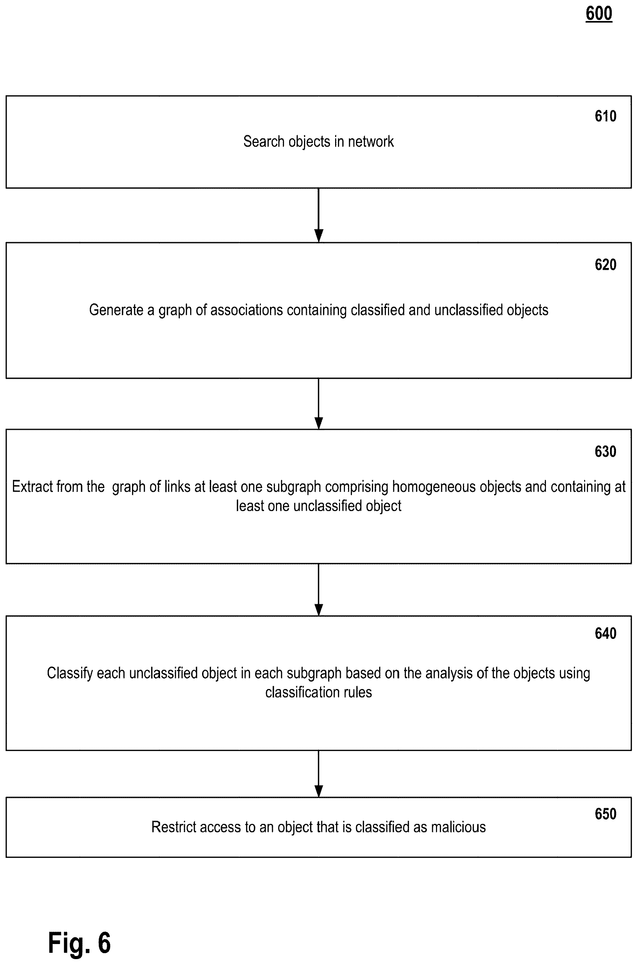

**Fig. 6** illustrates an example of a method **600** for classifying objects to prevent the spread of malicious activity. Further, in the description of the steps of the method **600,** the attribute "domain name" is used as the attribute "object", and depending on the examples, any other object specified within the scope of the present disclosure, or a combination thereof, may be used.

In step **610,** by the information collection module **130,** method **600** searches for objects in a network that have generic information with other objects and collects information about the objects, such as domain names on the network **110.** For example, during object information collection, objects are searched on the network **110** that have generic information with:
- objects that were previously classified as malicious, and
- objects that in turn have generic information with objects that are classified as malicious.

The objects found in the network **110** are unclassified objects.

In step **620,** by the module for generating the graph **210,** method **600** generates a graph of associations containing classified objects and unclassified objects in a form of vertices, whereby an association between objects indicates a presence of generic information between the objects, wherein the classified objects comprise malicious objects.

In a particular example, an association graph is generated, in which the association graph contains association only between objects of different types.

Objects and object information are at least two of the following types of information: IP address; FQDN URI information; domain name data, including information about the domain name registrar; information about the owner of the domain name, including the name of the owner who owns the domain name, the address of the owner of the domain name, the IP address range to which the domain name belongs on the network, and contact information for the owner of the domain name; information about the owner of the IP address, including the name and address of the owner of the IP address; name of the computer network range; a location that corresponds to an IP address range, including country and city; contact details of the administrator; information about the IP address to which the scanned object belongs; information about the public key certificates issued for the domain name; file hash and file path; web addresses that contain a domain name as well as one of the following URI information: page address, page load parameters, other components of the URI information.

In yet another particular example, in step **620,** method **600** further classifies unclassified domain name objects as trusted in the event that the number of requests received from the domain name system exceeds a predetermined threshold.

In step **630,** by the analyzer **240,** method **600** extracts from the generated graph of associations at least one subgraph comprising homogeneous objects and containing at least one unclassified object based on at least one of the following: an analysis of group association between objects; and an analysis of sequential association between objects.

In a particular example, each of these analysis approaches is performed using at least one machine learning model trained by "decision tree boosting."

In a particular example, sequential analysis uses at least one neighboring malicious object and information about at least three associated objects, and group-based analysis uses information about at least four objects, three of which are associated with a fourth.

In step **640,** by the analyzer **240,** method **600** classifies each unclassified object in each subgraph based on the analysis of the objects using classification rules. In special cases, implementations of classification rules include at least one of the following approaches: object analysis using a machine learning model and object similarity analysis, which is implemented using the Levenshtein metric.

In step **650,** method **600** restricts access to an object that is classified as malicious in order to prevent a spread of malicious activity. In one example, the restricting of access is performed by one of the following: blocking access to the website to which the object is associated; opening the website to which the object is associated in a browser that is running in protected mode; pausing the transition to the website, and informing the user that the website is associated with the malicious object.

Thus, the above system and method solve the technical problem of creating a way to classify objects into malicious and trusted objects in order to prevent the spread of malicious activity.

**Fig. 7** is a block diagram illustrating a computer system **20** on which examples of systems and methods for classifying objects to prevent the spread of malicious activity may be implemented. The computer system **20** can be in the form of multiple computing devices, or in the form of a single computing device, for example, a desktop computer, a notebook computer, a laptop computer, a mobile computing device, a smart phone, a tablet computer, a server, a mainframe, an embedded device, and other forms of computing devices.

As shown, the computer system **20** includes a central processing unit (CPU) 21, a system memory **22,** and a system bus **23** connecting the various system components, including the memory associated with the central processing unit **21.** The system bus **23** may comprise a bus memory or bus memory controller, a peripheral bus, and a local bus that is able to interact with any other bus architecture. Examples of the buses may include PCI, ISA, PCI-Express, HyperTransport^{™}, InfiniBand^{™}, Serial ATA, I²C, and other suitable interconnects. The central processing unit **21** (also referred to as a processor) can include a single or multiple sets of processors having single or multiple cores. The processor **21** may execute one or more computer-executable code implementing the techniques of the present disclosure. The system memory **22** may be any memory for storing data used herein and/or computer programs that are executable by the processor **21.** The system memory **22** may include volatile memory such as a random access memory (RAM) **25** and non-volatile memory such as a read only memory (ROM) **24,** flash memory, etc., or any combination thereof. The basic input/output system (BIOS) **26** may store the basic procedures for transfer of information between elements of the computer system 20, such as those at the time of loading the operating system with the use of the ROM **24.**

The computer system **20** may include one or more storage devices such as one or more removable storage devices **27,** one or more non-removable storage devices 28, or a combination thereof. The one or more removable storage devices **27** and non-removable storage devices **28** are connected to the system bus **23** via a storage interface **32.** In an example, the storage devices and the corresponding computer-readable storage media are power-independent modules for the storage of computer instructions, data structures, program modules, and other data of the computer system **20.** The system memory **22,** removable storage devices 27, and non-removable storage devices **28** may use a variety of computer-readable storage media. Examples of computer-readable storage media include machine memory such as cache, SRAM, DRAM, zero capacitor RAM, twin transistor RAM, eDRAM, EDO RAM, DDR RAM, EEPROM, NRAM, RRAM, SONOS, PRAM; flash memory or other memory technology such as in solid state drives (SSDs) or flash drives; magnetic cassettes, magnetic tape, and magnetic disk storage such as in hard disk drives or floppy disks; optical storage such as in compact disks (CD-ROM) or digital versatile disks (DVDs); and any other medium which may be used to store the desired data and which can be accessed by the computer system **20.**

The system memory **22,** removable storage devices **27,** and non-removable storage devices **28** of the computer system **20** may be used to store an operating system **35,** additional program applications **37,** other program modules **38,** and program data **39.** The computer system **20** may include a peripheral interface 46 for communicating data from input devices **40,** such as a keyboard, mouse, stylus, game controller, voice input device, touch input device, or other peripheral devices, such as a printer or scanner via one or more I/O ports, such as a serial port, a parallel port, a universal serial bus (USB), or other peripheral interface. A display device **47** such as one or more monitors, projectors, or integrated display, may also be connected to the system bus **23** across an output interface **48,** such as a video adapter. In addition to the display devices **47,** the computer system **20** may be equipped with other peripheral output devices (not shown), such as loudspeakers and other audiovisual devices.

The computer system **20** may operate in a network environment, using a network connection to one or more remote computers **49.** The remote computer (or computers) 49 may be local computer workstations or servers comprising most or all of the aforementioned elements in describing the nature of a computer system **20.** Other devices may also be present in the computer network, such as, but not limited to, routers, network stations, peer devices or other network nodes. The computer system **20** may include one or more network interfaces **51** or network adapters for communicating with the remote computers **49** via one or more networks such as a local-area computer network (LAN) **50,** a wide-area computer network (WAN), an intranet, and the Internet. Examples of the network interface **51** may include an Ethernet interface, a Frame Relay interface, SONET interface, and wireless interfaces.

Aspects of the present disclosure may be a system, a method, and/or a computer program product. The computer program product may include a computer-readable storage medium (or media) having computer-readable program instructions thereon for causing a processor to carry out aspects of the present disclosure.

The computer-readable storage medium can be a tangible device that can retain and store program code in the form of instructions or data structures that can be accessed by a processor of a computing device, such as the computing system **20.** The computer-readable storage medium may be an electronic storage device, a magnetic storage device, an optical storage device, an electromagnetic storage device, a semiconductor storage device, or any suitable combination thereof. By way of example, such computer-readable storage medium can comprise a random access memory (RAM), a read-only memory (ROM), EEPROM, a portable compact disc read-only memory (CD-ROM), a digital versatile disk (DVD), flash memory, a hard disk, a portable computer diskette, a memory stick, a floppy disk, or even a mechanically encoded device such as punch-cards or raised structures in a groove having instructions recorded thereon. As used herein, a computer-readable storage medium is not to be construed as being transitory signals per se, such as radio waves or other freely propagating electromagnetic waves, electromagnetic waves propagating through a waveguide or transmission media, or electrical signals transmitted through a wire.

Computer-readable program instructions described herein can be downloaded to respective computing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network interface in each computing device receives computer-readable program instructions from the network and forwards the computer-readable program instructions for storage in a computer-readable storage medium within the respective computing device.

Computer-readable program instructions for carrying out operations of the present disclosure may be assembly instructions, instruction-set-architecture (ISA) instructions, machine instructions, machine dependent instructions, microcode, firmware instructions, state-setting data, or either source code or object code written in any combination of one or more programming languages, including an object oriented programming language, and conventional procedural programming languages. The computer-readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or WAN, or the connection may be made to an external computer (for example, through the Internet). In some examples, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform examples of the present disclosure.

In various examples, the systems and methods described in the present disclosure can be addressed in terms of modules. The term "module" as used herein refers to a real-world device, component, or arrangement of components implemented using hardware, such as by an application specific integrated circuit (ASIC) or FPGA, for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a computer system (such as the one described in greater detail in **Fig. 7** above). Accordingly, each module may be realized in a variety of suitable configurations, and should not be limited to any particular implementation exemplified herein.

In the interest of clarity, not all of the routine features of the examples are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of those skilled in the relevant art(s). Moreover, it is not intended for any term in the specification or claims to be ascribed an uncommon or special meaning unless explicitly set forth as such.

The various examples disclosed herein encompass present and future known equivalents to the known modules referred to herein by way of illustration. Moreover, while examples and applications have been shown and described, it would be apparent to those skilled in the art having the benefit of this disclosure that many more modifications than mentioned above are possible without departing from the inventive concepts disclosed herein.

## Claims

1. A method for classifying objects to prevent the spread of malicious activity, the method comprising:
searching for objects in a network that have generic information with other objects and collecting information about the objects;
generating a graph of associations containing classified objects and unclassified objects in a form of vertices, whereby an association between objects indicates a presence of generic information between the objects, wherein the classified objects comprise malicious objects;
extracting from the generated graph of associations at least one subgraph comprising homogeneous objects and containing at least one unclassified object based on at least one of the following: an analysis of the group association between objects; and an analysis of sequential association between objects;
classifying each unclassified object in each subgraph based on the analysis of the objects using classification rules; and
restricting access to an object that is classified as malicious in order to prevent a spread of malicious activity.

2. The method according to claim 1, wherein the other objects comprise either objects that are classified as malicious or objects that have a generic information with objects that are classified as malicious.

3. The method according to any of claims 1 to 2, wherein the classification rules include at least one of the following: a similarity analysis or an analysis of objects using a machine learning model.

4. The method according to claim 3, wherein the similarity analysis is implemented using the Levenshtein metric.

5. The method according to any of claims 1 to 4, wherein the graph of associations contains only associations between objects of different types.

6. The method according to any of claims 1 to 5, wherein the objects and object information are at least two of the following types of information:
Internet Protocol (IP) address;
Fully Qualified Domain Name (FQDN);
Universal Resource Identifier (URI) information;
domain name data, including information about a domain name registrar;
information about an owner of a domain name, including a name of an owner who owns the domain name, an address of the owner of the domain name, an IP address range to which the domain name belongs on the network, and contact information for the owner of the domain name;
information about an owner of the IP address, including a name and an address of the owner of the IP address;
name of the computer network range;
a location that corresponds to an IP address range, including country and city;
contact details of an administrator;
information about the IP address to which the object belongs;
information about public key certificates issued for the domain name;
file hash and file path; and
web addresses that contain the domain name.

7. The method according to any of claims 1 to 6, wherein, the generating of the graph of associations containing classified objects and unclassified objects in the form of vertices further comprises:
classifying unclassified objects that are domain names as trusted in an event that the number of requests received from the domain name system exceeds a predetermined threshold.

8. The method according to any of claims 1 to 7, wherein at least one subgraph extracts associated components that contain information about associated objects, wherein the at least one object is unclassified.

9. The method according to any of claims 1 to 8, wherein each of the analysis is performed by at least one machine learning model.

10. The method according to claim 9, wherein the machine learning model is trained by using boosting decision trees.

11. The method according to any of claims 1 to 10, wherein the sequential analysis employs at least one neighboring malicious object.

12. The method according to any of claims 1 to 11, wherein the analysis of a sequential association between objects uses information about at least three objects having an association.

13. The method according to any of claims 1 to 12, wherein the analysis of a group association between objects uses information about at least four objects, three of which have an association to a fourth.

14. The method according to any of claims 1 to 13, wherein the access to an object that is classified as malicious is restricted to prevent the spread of malicious activity by one of the following: blocking access to the website to which the object is associated; opening the website to which the object is associated in a browser that runs in protected mode; and pausing a transition to the website, and informing a user that the website is associated with a malicious object.

15. A system for classifying objects to prevent the spread of malicious activity, comprising:
at least one memory; and
at least one hardware processor coupled with the at least one memory and configured, individually or in combination, to:
search for objects in a network that have generic information with other objects and collect information about the objects;
generate a graph of associations containing classified objects and unclassified objects in a form of vertices, whereby an association between objects indicates a presence of generic information between the objects, wherein the classified objects comprise malicious objects;
extract from the generated graph of associations at least one subgraph comprising homogeneous objects and containing at least one unclassified object based on at least one of the following: an analysis of group association between objects; and an analysis of sequential association between objects;
classify each unclassified object in each subgraph based on the analysis of the objects using classification rules; and
restrict access to an object that is classified as malicious in order to prevent a spread of malicious activity.
